# DEMANDE DE BREVET EUROPEEN

(11) **EP 2 590 256 A1**
(43) Date de publication de la demande: **08.05.2013**
(21) Numéro de dépôt: 11187563.9
(22) Date de dépôt: 02.11.2011
(51) Int. Cl.: H01M 16/00, H01M 8/04

(54) **Procédé de gestion du fonctionnement d'un système hybride**

(71) Demandeur: Belenos Clean Power Holding AG, 2502 Bienne (CH)
(72) Inventeur: Corson, Donald, 1400 Yverdon-les-Bains (CH)
(74) Mandataire: Ravenel, Thierry Gérard Louis

(57) **Abrégé**

La présente invention concerne un procédé de gestion du fonctionnement d'une alimentation en courant continu hybride (1), ladite alimentation comprenant une pile à combustible (2), une batterie (6) et un convertisseur DC/DC (4) comportant une entrée et une sortie, l'entrée du convertisseur étant reliée à la sortie de la pile à combustible et la sortie étant reliée à une charge variable (8) en parallèle avec la batterie, la pile à combustible étant formée d'une pluralité de cellules électrochimiques adaptés pour produire de l'électricité à partir d'un gaz combustible et d'un gaz oxydant, caractérisé en ce que ledit procédé comprend les étapes suivantes:
a) Fournir un flux de gaz combustible et un flux de gaz oxydant à chacune des cellules électrochimiques;
b) Définir une consigne représentative du besoin de puissance;
c) Surveiller la pression de gaz combustible et la pression de gaz oxydant dans la pile à combustible;
d) Surveiller la tension de sortie de la pile à combustible, le courant de sortie de la pile à combustible et la tension de la batterie;
e) Faire varier la puissance de sortie de la pile à combustible en faisant varier le courant de sortie de la pile à combustible et la pression dans la pile à combustible par le convertisseur DC/DC;
f) gérer le fonctionnement de ladite alimentation en courant continu hybride en appliquant une série de test.

## Description

La présente invention concerne un procédé de gestion du fonctionnement d'une alimentation en courant continu hybride, ladite alimentation comprenant une pile à combustible, une batterie et un convertisseur DC/DC comportant une entrée et une sortie, l'entrée du convertisseur étant reliée à la sortie de la pile à combustible et la sortie étant reliée à une charge variable en parallèle avec la batterie, la pile à combustible étant formée d'une pluralité de cellules électrochimiques adaptés pour produire de l'électricité à partir d'un gaz combustible et d'un gaz oxydant.

### ARRIERE PLAN TECHNOLOGIQUE

On connaît des assemblages de blocs électrochimiques reliés en série (souvent appelés piles). Les blocs électrochimiques ainsi assemblés peuvent être constitués par exemple par des éléments d'accumulateur, ou encore par des cellules à combustible. Une cellule à combustible est un dispositif électrochimique prévu pour convertir une énergie chimique directement en énergie électrique. Par exemple, un type de cellule à combustible inclus une anode et une cathode entre lesquelles est arrangée une membrane à échange de proton souvent appelée membrane électrolyte polymère. Ce type de membrane permet de ne laisser passer que les protons entre l'anode et la cathode de la cellule à combustible. Au niveau de l'anode, de l'hydrogène diatomique subit une réaction afin de produire des ions H⁺ qui vont passer à travers la membrane électrolyte polymère. Les électrons produits par cette réaction rejoignent la cathode par un circuit externe à la cellule à combustible, produisant ainsi un courant électrique. Du fait qu'une seule cellule à combustible ne produit, en général, qu'une faible tension (environ 1 Volt), on assemble souvent les cellules à combustible en série de manière à constituer des piles de cellules à combustible capables de produire une tension plus élevée qui est l'addition des tensions de chaque cellule.

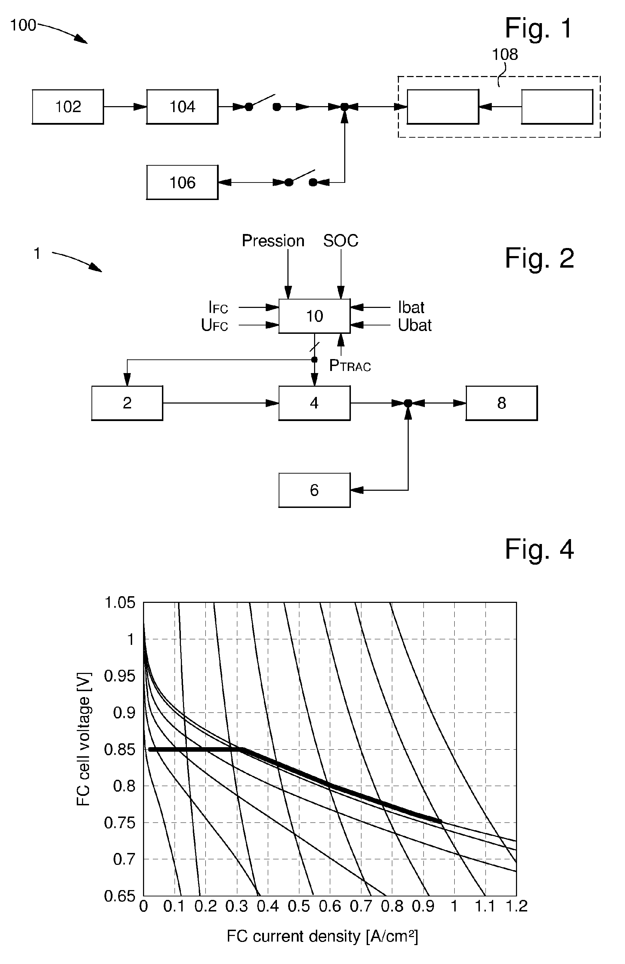

Ces piles à combustible sont, dans le cas d'une utilisation dans le secteur automobile, associées à une batterie afin de former un système hybride 100. Ce système connecte en parallèle la pile à combustible 102 et la batterie de sorte que la pile à combustible ou la batterie 106 alimentent simultanément ou séparément la voiture 108, via une section commune appelée bus. Cette hybridation permet aussi à la pile à combustible de recharger la batterie qui fournira l'énergie électrique à la voiture. Un système hybride est dit « actif » lorsqu'il utilise un convertisseur DC/DC 104 branché en sortie de la pile à combustible 102 comme visible à la figure 1. Ce convertisseur DC/DC 104 est utilisé pour adapter les niveaux de tension de la pile à combustible 102 et de la batterie 106 et pour réguler la puissance délivrée par la pile à combustible 102.

Or, cette régulation nécessite la mise en place d'une stratégie de commande pour, répartir la puissance entre la pile à combustible 102 et la batterie 106 en fonction de la demande de puissance du moteur électrique de la voiture et des contraintes du système. Les contraintes du système dont doit tenir compte la stratégie de commande sont les tensions et les courants maximum de la pile à combustible et de la batterie, les températures limites à ne pas dépasser, l'état de charge de la batterie c'est-à-dire, par exemple, qu'il ne faut pas charger la batterie lorsque celle-ci est déjà chargée à 100%, etc.

L'une des stratégies de commande d'un tel système hybride consiste à réguler l'état de charge de la batterie autour d'une valeur nominale sans jamais atteindre la limite maximale ou la limite minimale de ladite batterie. Ainsi, la batterie n'a jamais besoin d'être rechargée par l'extérieure, sa recharge étant assurée par la pile à combustible et éventuellement par la récupération de l'énergie cinétique du véhicule lorsque ce dernier est en phase de freinage. Cela revient à dire que la pile à combustible fournit la puissance moyenne consommée par le moteur électrique du véhicule alors que la batterie est utilisée comme moyen tampon énergétique en charge ou en décharge. Une telle stratégie est mise en oeuvre en régulant, à l'aide du convertisseur DC/DC, la tension du bus à une valeur constante.

Un inconvénient de cette stratégie connue est que rien n'est mis en oeuvre pour empêcher la pile à combustible de fonctionner dans une zone de tension dite « en circuit ouvert » ou OCV (Open Circuit Voltage). On entend par zone de tension « en circuit ouvert », la zone de fonctionnement dans laquelle la tension par cellule est supérieure à 0.85 - 0.9V/cellule. Une telle tension est connue pour réduire considérablement la durée de vie de la pile à combustible. Il n'est donc pas souhaitable que la pile fonctionne selon un tel mode. A pression constante, la pile à combustible travaille dans ce mode dit « en circuit ouvert » lorsque le courant de charge est petit.

Ce mode de fonctionnement en zone dite « en circuit ouvert » peut se produire dans le cas où un courant minimum est imposé à la pile à combustible et quie la pression est constante. En effet, cette solution permet d'éviter la zone dite « en circuit ouvert » car celle-ci apparait lorsque la tension est supérieure à 0.85 - 0.9V/cellule. Or cette tension augmente, a pression constante, lorsque le courant diminue. Or, la valeur du courant détermine la valeur de la puissance et il n'est pas toujours possible de consommer la puissance délivrée notamment s'il n'est plus possible de charger la batterie lorsque son état de charge est proche de 100%.

Un autre cas pouvant amener la pile à combustible à fonctionner en zone dite « en circuit ouvert » ou la pression est réduite. En réduisant à pression à faible puissance, on diminue la tension des cellules et on évite alors la zone dit en circuit ouvert. Néanmoins, il faut considérer que la dynamique de variation de la pression est bien plus lente que la dynamique de variation du courant et qu'une diminution du de la pression ne peut se faire que si un courant est consommé. La valeur du courant influe directement sur la vitesse de réduction de la pression. Ainsi si la puissance de la pile à combustible varie instantanément de quelques kilowatts à zéro kilowatt, la zone dite « en circuit ouvert » ne pourra être évitée car il n'y aura plus de courant pour réduire la pression. De même, si la puissance de la pile à combustible doit varier rapidement d'une puissance quelques watts à basse pression avec une puissance de quelques kilowatts à plus forte pression, il faut que la pression soit augmentée avant d'augmenter le courant. Cette façon de faire amène la pile à combustible à forcement aller, pour un court instant, en zone dite « en circuit ouvert » et donc détériore ladite pile à combustible.

### RESUME DE L'INVENTION

Un but de la présente invention est de fournir un procédé de fonctionnement d'un système hybride, comprenant une pile à combustible et une batterie, qui permet d'optimiser les performances du système hybride et d'augmenter la durée de vie de la pile à combustible.

A cet effet, l'invention a pour objet un procédé de gestion du fonctionnement d'une alimentation en courant continu hybride, ladite alimentation comprenant une pile à combustible, une batterie et un convertisseur DC/DC comportant une entrée et une sortie, l'entrée du convertisseur étant reliée à la sortie de la pile à combustible et la sortie étant reliée à une charge variable en parallèle avec la batterie, la pile à combustible étant formée d'une pluralité de cellules électrochimiques adaptés pour produire de l'électricité à partir d'un gaz combustible et d'un gaz oxydant, caractérisé en ce que ledit procédé comprend les étapes suivantes :
a) Fournir un flux de gaz combustible et un flux de gaz oxydant à chacune des cellules électrochimiques ;
b) Définir une consigne représentative du besoin de puissance ;
c) Surveiller la pression de gaz combustible et la pression de gaz oxydant dans la pile à combustible ;
d) Surveiller la tension de sortie de la pile à combustible, le courant de sortie de la pile à combustible et la tension de la batterie;
e) Faire varier la puissance de sortie de la pile à combustible en faisant varier le courant de sortie de la pile à combustible et la pression dans la pile à combustible par le convertisseur DC/DC ;
f) gérer le fonctionnement de ladite alimentation en courant continu hybride en appliquant réalisant les tests suivant :
   - 1) mesurer la tension de batterie et la comparer à une première valeur critique prédéterminée, si la tension de batterie dépasse ladite première valeur critique prédéterminée, réduire le courant de sortie de la pile à combustible et recommencer ladite étape f) sinon passer au second test;
   - 2) mesurer le courant en sortie de la pile à combustible et le comparer à une seconde valeur critique prédéterminée, si le courant de sortie descend sous ladite seconde valeur critique prédéterminée réduire la pression et recommencer ladite étape f) sinon passer au troisième test ;
   - 3) mesurer la tension en sortie de la pile à combustible et la comparer à une troisième valeur critique prédéterminée, si la tension en sortie de la pile à combustible dépasse ladite troisième valeur critique prédéterminée, mesurer la tension de batterie et la comparer à un premier seuil critique prédéterminé, si la tension de batterie descend sous ledit premier seuil critique prédéterminé, maintenir le courant de sortie de la pile à combustible constant et recommencer ladite étape f), sinon passer au quatrième test ;et
   - 4) mesurer l'indice de charge de la batterie et le comparer à une quatrième valeur critique prédéterminée, si l'indice de charge de la batterie est différent de ladite quatrième valeur critique prédéterminée, modifier le courant de sortie de la pile à combustible et recommencer ladite étape f) sinon aller au premier test.

Un avantage de la présente invention est de permettre une plus grande durée de vie de la pile à combustible. En effet, avec la stratégie selon la présente invention, les valeurs de tension de batterie et de tension de cellule de la pile à combustible ne sont jamais à des valeurs trop importantes. De la sorte, la batterie ne risque jamais d'atteindre une valeur risquant de la faire exploser et les cellules de la pile à combustible ne risquent jamais d'être endommager. En ménagent ainsi le système hybride selon la présente invention, la présente stratégie permet une durée d'utilisation plus importante.

Des modes de réalisation avantageux du procédé selon la présente invention font l'objet de revendications dépendantes.

Dans un premier mode de réalisation avantageux, l'étape f) comprend un sixième test à réaliser si le cinquième test réussit et qui consiste à mesure le courant en sortie de la pile à combustible et le comparer à un second seuil critique prédéterminé, si ledit courant en sortie de la pile à combustible est inférieur audit second seuil critique prédéterminée, augmenter le courant en sortie de la pile à combustible afin qu'il atteigne ledit second seuil critique prédéterminée et recommencer ladite étape f), sinon augmenter la pression jusqu'à atteindre la valeur de pression maximale.

Dans un second mode de réalisation avantageux, dans le test 4), si l'indice de charge de la batterie est inférieur à ladite quatrième valeur critique prédéterminée, augmenter le courant de sortie de la pile à combustible et recommencer ladite étape f), sinon diminuer le courant de sortie de la pile à combustible et recommencer ladite étape f).

Dans un autre mode de réalisation avantageux, la valeur de pression maximale est de 2.5 bar.

Dans un autre mode de réalisation avantageux, caractérisé en ce que l'alimentation en courant continu hybride comprend en outre un circuit de régulation utilisé pour récupérer les informations relatives au fonctionnement du système hybride et utilisé pour envoyer des signaux de commande à la pile à combustible et au convertisseur DC/DC.

### BREVE DESCRIPTION DES FIGURES

Les buts, avantages et caractéristiques du système hybride selon la présente invention apparaitront plus clairement dans la description détaillée suivante d'au moins une forme de réalisation de l'invention donnée uniquement à titre d'exemple non limitatif et illustrée par les dessins annexés sur lesquels :
- La figure 1 représente de manière schématique un système hybride connu ;
- la figure 2 représente de manière schématique le système électrochimique fonctionnant selon le premier mode de fonctionnement de la présente invention ;
- la figure 3 représente le diagramme de fonctionnement de la pile à combustible lors du fonctionnement selon le procédé de la présente invention ;et
- la figure 4 représente les points de fonctionnement de la pile à combustible lors du fonctionnement selon le procédé de la présente invention..

### DESCRIPTION DETAILLEE

Dans la description suivante, toutes les parties d'une pile à combustible connues d'un homme du métier dans ce domaine technique ne seront expliquées que de manière simplifiée.

Sur la figure 2, on a représenté de manière schématique un système hybride 1 conforme à la présente invention. Ce système hybride 1 comprend une pile à combustible 2 c'est-à-dire une pluralité de cellules électrochimiques montées en série. Cette pile à combustible 2 est alimentée par un combustible réducteur tel que de l'hydrogène et par un oxydant tel que de l'oxygène. La réaction du combustible réducteur et de l'oxydant entraîne la génération de tension de pile à combustible. L'eau issue de la réaction du combustible réducteur et de l'oxydant peuvent être évacués via des circuits de recirculations équipés de pompes de recirculation. Le système hybride 1 comprend également des moyens de stockage d'énergie 6 tel qu'une ou plusieurs batteries ou super-capacités. Dans le reste de la description, on considérera que ces moyens de stockage d'énergie électrique sont une batterie 6 mais rien n'empêche d'avoir plusieurs batteries. Cette batterie 6 fournit une tension de batterie et est branchée en parallèle de la pile à combustible 2 de sorte que la pile à combustible 2 et la batterie 6 soient toutes les deux connectées à une charge variable 8. Cette charge variable 8 peut être, par exemple, un moteur de voiture.

Ce système hybride 1 comprend également un convertisseur DC/DC 4 comprenant un bloc d'entrée et un bloc de sortie. Au bloc d'entrée du convertisseur DC/DC 4 sont connectées les sorties de la pile à combustible 2, cela signifie donc que la tension fournie par la pile à combustible 2 entre dans le convertisseur DC/DC 4. Au bloc de sortie du convertisseur DC/DC 4 sont connectés les points de connexion de la charge variable 8 et de la batterie 6. On comprendra que le bloc d'entrée comprend plusieurs entrées et que le bloc de sortie comprend plusieurs sorties.

Le convertisseur DC/DC 4 est également agencé pour contrôler le système hybride 1 car le convertisseur DC/DC 4 est capable d'adapter le niveau de tension en contrôlant le courant de la pile à combustible 2. De même le convertisseur DC/DC peut réguler la puissance délivrée par la pile à combustible 2.

En effet, le rôle du convertisseur DC/DC 4 est de piloter le système hybride 1 de sorte que la batterie 6 et la pile à combustible 2 fonctionne ensemble pour alimenter la charge 8. Le convertisseur DC/DC a également pour but de répartir la puissance fournie par la pile à combustible entre la charge qui est le moteur dans le cadre d'une application automobile et la batterie. Ce pilotage du système hybride 1 est bien entendu soumis à des contraintes qui sont les tensions et courants limites de la pile à combustible 2, les tensions et courants limites de la batterie 6, les états de charge limites de la batterie 6, les températures limites à ne pas dépasser et autres.

Le système hybride 1 comprend en outre un circuit de régulation 10 visible à la figure 2 utilisé pour récupérer les informations relatives au fonctionnement du système hybride 1 et qui est également utilisé pour envoyer des signaux de commande à la pile à combustible 2 et au convertisseur DC/DC 4. Les informations relatives au fonctionnement du système hybride 1 sont les consignes de tension et de courant de la pile à combustible et de la batterie 6 ainsi que les consignes de puissance et toutes les informations mesurées c'est à dire les tensions et courants de batterie 6 et de pile à combustible 2, la pression P dans la pile à combustible et la puissance produite par ledit système hybride. Les signaux envoyés par le circuit de régulation 10 vers la pile à combustible 2 servent à faire varier la pression P. Les signaux envoyés par le circuit de régulation vers le convertisseur DC/DC 4 servent à faire varier la tension en contrôlant le courant de la pile à combustible 2.

Or, une pile à combustible 2 se caractérise par sa courbe de la tension de cellule en fonction en fonction du courant et de la pression. On peut remarquer sur la figure 4 que la tension de cellule à combustible varie en fonction du courant en plus particulièrement que cette tension de cellule diminue lorsque le courant augmente c'est-à-dire lorsque la puissance P_{TRAC} augmente. On constate qu'à très faible courant, la tension de cellule est élevée risquant d'endommager lesdites cellules. Cette courbe de la tension de cellule en fonction du courant se caractérise également en ce qu'elle dépend de la pression P. En effet, pour chaque valeur de pression, il existe une courbe représentative de la tension de cellule en fonction du courant. On constate que pour un courant donné, la tension de cellule augmente avec la pression P. En conséquence, l'augmentation de la pression P permet d'avoir une puissance supérieure. Dès lors, il est possible de choisir son point de fonctionnement en faisant varier le courant Ifc et la pression P.

La stratégie désirée consiste à avoir, lorsque le système hybride 1 consomme une faible puissance, une tension de cellule Ufc qui est régulée à une valeur déterminée. Ce fonctionnement est demandé car la courbe de la tension de cellule en fonction Ufc en fonction du courant Ifc et de la pression P montre que c'est à basse puissance (c'est-à-dire à bas courant) que la tension de cellule Ufc peut être maximale. Il est donc nécessaire de réguler cette tension de cellule Ufc en agissant sur le courant Ifc et la pression P. En haute puissance, comme la tension de cellule Ufc diminue en fonction du courant Ifc, la tension de cellule Ufc n'a pas besoin d'être régulée. Cette commande vient de l'idée consistant à réduire la pression de fonctionnement de la pile à combustible 2 à faible puissance pour éviter la zone OCV. Il faut cependant considérer que la dynamique de variation de la pression est bien plus lente que la dynamique de variation du courant (de l'ordre de la seconde pour la pression P et de la ms pour le courant). Il faut également considérer qu'une diminution de la pression P dans la pile à combustible 2 ne peut se faire que si un courant est consommé, et la valeur du courant influe directement sur la vitesse de réduction de la pression.

Pour le fonctionnement du système hybride 1, la présente invention se propose de mettre en oeuvre une stratégie faisant l'objet de la présente invention afin de faire fonctionner le système hybride 1 de façon sure tout en essayant d'obtenir la durée de vie la plus longue.

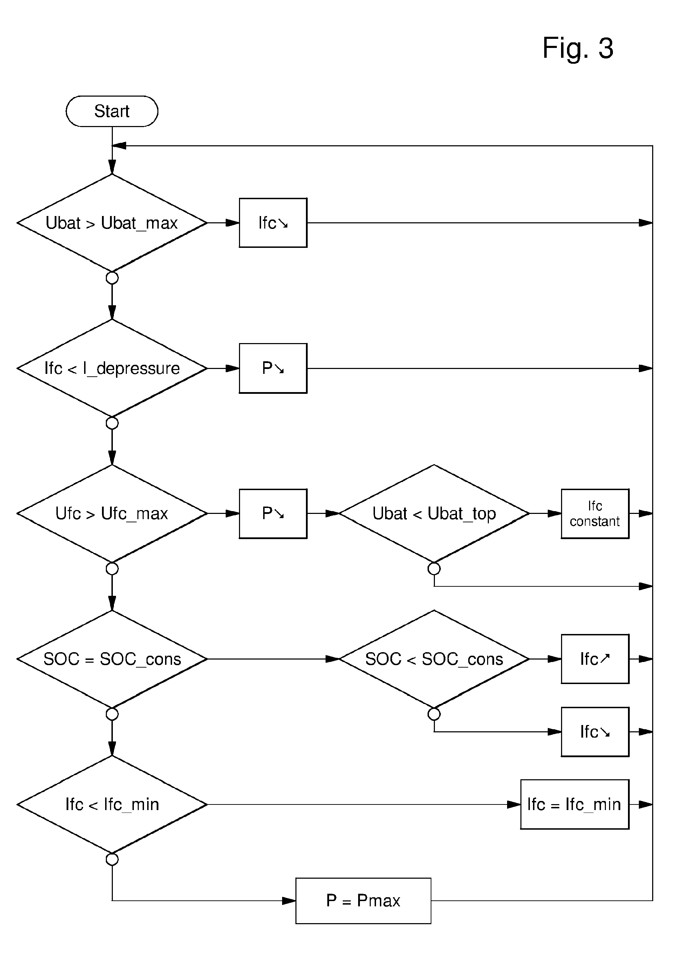

Pour cela, la stratégie selon la présente invention visible à la figure 3 se propose de satisfaire un certain nombre de critères en réalisant une série de tests.

Le premier critère précise que la tension de batterie Ubat doit être inférieure à une première valeur critique prédéterminée. Cette première valeur critique prédéterminée est une valeur choisie en fonction du type de batterie 6. Cette valeur consiste en une valeur critique au delà de laquelle la batterie 6 risque de surchargée. Or, une surcharge de la batterie 6 peut entraîner une détérioration de celle-ci mais surtout un risque d'explosion. Un tel risque n'est pas envisageable car, le type de batterie 6 utilisée contient des produits toxiques voir corrosifs et surtout, une batterie 6 montée dans un véhicule est susceptible de faire plus de dégâts. Voila pourquoi ce premier critère qui est celui de la sécurité est le plus important et c'est ce critère qui doit être satisfait en premier.

Le second critère précise que la puissance demandée par la charge P_{TRAC} soit couverte en priorité par la pile à combustible 2. On entend par là que la batterie doit être utilisée au minimum et qu'elle ne doit permettre que de combler la différence de puissance entre la puissance demandée par la charge P_{TRAC} et la puissance maximale fournie par la pile à combustible 2. Ce critère permet de dimensionner la batterie 6 afin de l'optimiser de sorte que celle-ci ne fournisse que le minimum de puissance nécessaire. On entend par là que la batterie 6 est capable de fournir au moins la différence de puissance entre la puissance maximale fournie par la pile à combustible 2 et la puissance maximale demandée par la charge.

Le troisième critère précise que la tension de sortie de la pile à combustible Ufc est régulée de sorte qu'elle ne dépasse pas une troisième valeur critique prédéterminée. En effet, la tension de chaque cellules d'une pile à combustible 2 ne doit pas dépassée une certaine valeur sous peine de voir ces cellules se détériorées. Une détérioration des cellules entraîne une diminution de la durée de vie de la pile à combustible et une dégradation des performances. Cette tension Ufc peut être la tension de chacune des cellules ou alors la tension totale de sortie de la pile à combustible.

Le quatrième critère consiste à maintenir le niveau de charge SOC de la batterie à un niveau constant désirée.

Afin de satisfaire à ces quatre critères, la stratégie selon la présente invention prévoit, via le circuit de régulation, de réaliser cinq tests afin de satisfaire aux critères définis. Ces cinq tests consistent à faire des mesures en parallèle puis à réaliser des comparaisons en série. On entend par là, qu'à un instant donné, toutes les mesures nécessaires aux différents tests sont faites. Ensuite, les tests sont réalisés. Ces tests sont définis de sorte que si la condition du test est remplie alors une action est opérer pour corriger et refaire le test ou tout le processus et que si la condition du test n'est pas remplie, on passe au test suivant. Comme ses tests sont faits dans un ordre d'importance, on s'assure que le critère le plus important est toujours rempli.

Le premier test consiste à tester si la tension de batterie Ubat pour voir si cette tension de batterie dépasse une première valeur critique prédéterminée Ubat_max. Cette valeur critique prédéterminée Ubat_max est choisi en fonction de la batterie. Pour le cas présent, cette limite est fixée à 288V car la batterie utilisée à une tension maximale de 350V et que la première valeur critique prédéterminée Ubat_max est choisi pour assurer une marge de manoeuvre. Le dépassement de la première valeur critique prédéterminée signifie que la batterie reçoit trop de courant de la charge. On comprend alors que la puissance délivrée par la pile à combustible est trop importante. Si cette condition de tension est vérifiée alors le circuit de régulation envoi en conséquence un signal au convertisseur DC/DC 4 afin que celui-ci réduise la valeur du courant de sortie de la pile à combustible Ifc. Cette réduction du courant Ifc entraîne une réduction de la puissance de la pile à combustible 2. A la suite de cela, des nouvelles mesures sont faites et ce premier test est refait. En effet, comme il s'agit du test représentant le critère le plus important, ce critère doit absolument être validé pour pouvoir satisfaire aux autres critères. Si cette condition de tension n'est pas vérifiée c'est-à-dire que la tension de batterie ne dépasse pas la première valeur critique prédéterminée Ubat_max, alors le second test est réalisé.

Le second test consiste à surveiller le courant en sortie de la pile à combustible Ifc descend sous une seconde valeur critique prédéterminée I_depressure pour ensuite ajuster la tension de sortie de la pile à combustible Ufc. En effet, à la pression P maximale, il existe une valeur du courant de la pile à combustible Ifc appelé seconde valeur critique prédéterminée I_depressure en dessous de laquelle la tension de sortie de la pile à combustible Ufc devient supérieure à une valeur seuil, ici 0.85V, ce qui peut endommager les cellules de la pile à combustible et réduire leur durée de vie.

Ainsi, dans le cas où le courant Ifc en sortie de la pile à combustible 2 descend sous cette seconde valeur critique prédéterminée I_depressure, la pression P dans la pile à combustible 2 est diminuée ce qui entraîne la diminution de la tension de sortie de la pile à combustible Ufc. Ce test peut également être fait en comparant la tension en sortie de la pile à combustible Ufc avec l'équivalent en tension du deuxième seuil critique prédéterminé. Cet équivalent correspond à la tension Ufc de cellule de la pile à combustible 2 pour une pression maximale Pmax et pour un courant Ifc égal au deuxième seuil critique prédéterminé. Si ce second test est négatif, c'est-à-dire que le courant Ifc en sortie de la pile à combustible 2 est supérieur au second seuil critique, alors le troisième test est réalisé. Sinon, les tests précédents sont refaits jusqu'à ce que la condition du test soit réalisée.Le troisième test consiste à surveiller si la tension de cellule en sortie de la pile à combustible Ufc dépasse la troisième valeur critique prédéterminée Ufc_max et puis à comparer la tension de batterie à un quatrième seuil critique prédéterminé. En effet, si la tension de cellule en sortie de la pile à combustible Ufc dépasse la troisième valeur critique prédéterminée Ufc_max, il existe deux moyens pour la baisser, il faut soit diminuer le courant de sortie de la pile à combustible ifc soit diminuer la pression P dans la pile à combustible 2. Or, si la tension de batterie Ubat est inférieure à un premier seuil critique prédéterminé, cette tension de batterie Ubat ne dépasse donc pas la première valeur critique prédéterminée Ubat_max du premier test. Le courant Ifc de sortie de la pile à combustible 2 n'a, ainsi, pas besoin d'être diminué. Il convient alors de baisser la pression P pour diminuer la tension en sortie de la pile à combustible Ufc. Cela permet alors de protéger les cellules de la pile à combustible 2 d'une surtension tout en ne diminuant pas la charge de la batterie 6 puisque le courant en sortie de la pile à combustible Ifc ne varie pas.

Ce troisième test consiste donc à comparer la tension Ufc de cellule en sortie de la pile à combustible 2 à un troisième seuil critique prédéterminé. Si la tension de cellule en sortie de la pile à combustible est supérieure au troisième seuil critique prédéterminé, la pression est réduite et la tension de batterie est comparée à un quatrième seuil critique. Si la tension de batterie est inférieure au quatrième seuil critique, le courant est maintenu constant puis les précédents tests sont refaits. Si la tension de batterie est supérieure au quatrième seuil critique, le courant est laissé libre puis les précédents tests sont refaits.

Le quatrième test consiste à surveiller l'indice de charge SOC de la batterie et à modifier la valeur du courant de sortie de la pile à combustible Ifc en conséquence. En effet, l'indice de charge de la batterie SOC est dépendant du courant de sortie de la batterie Ifc si bien que si le courant Ifc augmente, l'indice de charge de la batterie SOC augmente. Or, il est important que cet indice de charge SOC ne soit pas trop élevé afin que la batterie puisse encaissée des retours de courant importants. Ainsi, l'indice de charge SOC est comparé à une quatrième valeur critique prédéterminée SOC_cons qui représente l'indice de charge SOC désiré. Si l'indice de charge SOC est différent de cette quatrième valeur critique prédéterminée SOC_cons, alors le circuit de régulation détermine si l'indice de charge SOC est inférieur ou supérieur à ladite quatrième valeur critique prédéterminée SOC_cons. Si l'indice de charge SOC est inférieur à ladite quatrième valeur critique prédéterminée SOC_cons, le circuit de régulation ordonne d'augmenter le courant de sortie de la pile à combustible. Au contraire, si l'indice de charge SOC est supérieur à ladite quatrième valeur critique prédéterminée SOC_cons, le circuit de régulation ordonne de diminuer le courant Ifc de sortie de la pile à combustible 2. Peu importe la réponse au test, c'est-à-dire que l'indice de charge est égal ou non à ladite quatrième valeur critique prédéterminée SOC_cons, les tests seront refaits entièrement. On prévoira que cette indice de charge SOC soit compris entre 0.6 et 0.8 c'est-à-dire que la batterie 6 soit chargée entre 60% et 80% et que cette indice de charge ne dépasse jamais 0.9 soit 90%.

Dans une variante, un cinquième test est réalisé. Ce cinquième test consiste à surveiller le courant de sortie de la pile à combustible afin que celui-ci ne descende jamais en dessous d'un second seuil prédéterminé Ifc_min. Effectivement, la caractéristique du courant en fonction de la pression P et de la tension d'une cellule à combustible Ufc montre que, pour réduire la tension Ufc de sortie de la pile à combustible 2, il faut diminuer la pression P pour ensuite diminuer le courant Ifc. On réduit d'abord la pression P avant le courant Ifc car la réduction de la pression P permet, à courant Ifc constant, de diminuer la tension de sortie de la pile à combustible Ufc, la réduction du courant Ifc faisant remonter la valeur de cette tension Ufc de sortie de la pile à combustible 2. Ce courant Ifc minimum correspond au courant pour lequel, à la pression P est minimale, on obtient la tension Ufc en sortie de la pile à combustible qui est égale à la troisième valeur critique prédéterminée. En dessous de ce second seuil Ifc_min, la tension Ufc augmente donc exponentiellement est cela risque d'endommager la pile à combustible.

Si cette condition de courant n'est pas respectée, c'est-à-dire que le courant de la pile à combustible Ifc est supérieur à ce second seuil Ifc_min, alors cela signifie que tous les critères définis sont remplis et que le système fonctionne de façon optimale. De ce fait, la pile à combustible 2 peut fonctionner à plein régime et pour cela, la pression est augmenter jusqu'à obtenir la pression maximale. Cela permet d'obtenir potentiellement la puissance maximale de la pile à combustible 2.

Par la suite, le processus est recommencé c'est-à-dire que de nouvelles mesures sont faites et que les tests sont de nouveau effectués.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention défini par les revendications annexées.

## Revendications

1. Procédé de gestion du fonctionnement d'une alimentation en courant continu hybride (1), ladite alimentation comprenant une pile à combustible (2), une batterie (6) et un convertisseur DC/DC (4) comportant un bloc d'entrée et un bloc de sortie, l'entrée du convertisseur étant reliée à la sortie de la pile à combustible et la sortie étant reliée à une charge variable (8) en parallèle avec la batterie, la pile à combustible étant formée d'une pluralité de cellules électrochimiques adaptés pour produire de l'électricité à partir d'un gaz combustible et d'un gaz oxydant, **caractérisé en ce que** ledit procédé comprend les étapes suivantes :
a) Fournir un flux de gaz combustible et un flux de gaz oxydant à chacune des cellules électrochimiques ;
b) Définir une consigne représentative du besoin de puissance ;
c) Surveiller la pression de gaz combustible et la pression de gaz oxydant dans la pile à combustible ;
d) Surveiller la tension de sortie de la pile à combustible, le courant de sortie de la pile à combustible et la tension de la batterie;
e) Faire varier la puissance de sortie de la pile à combustible en faisant varier le courant (Ifc) de sortie de la pile à combustible et la pression (P) dans la pile à combustible par le convertisseur DC/DC ;
f) gérer le fonctionnement de ladite alimentation en courant continu hybride en appliquant réalisant les tests suivant :
- 1) mesurer la tension de batterie (Ubat) et la comparer à une première valeur critique prédéterminée (Ubat_max), si la tension de batterie dépasse ladite première valeur critique prédéterminée, réduire le courant de sortie de la pile à combustible (Ifc) et recommencer ladite étape f) sinon passer au second test;
- 2) mesurer le courant en sortie de la pile à combustible (Ifc) et le comparer à une seconde valeur critique prédéterminée (I_depressure), si le courant de sortie descend sous ladite seconde valeur critique prédéterminée (I_depressure) réduire la pression (P) et recommencer ladite étape f) sinon passer au troisième test ;
- 3) mesurer la tension en sortie de la pile à combustible (Ufc) et la comparer à une troisième valeur critique prédéterminée (Ufc_max), si la tension en sortie de la pile à combustible dépasse ladite troisième valeur critique prédéterminée (Ufc_max), mesurer la tension de batterie (Ubat) et la comparer à un premier seuil critique prédéterminé (Ubat_top), si la tension de batterie descend sous ledit premier seuil critique prédéterminé (Ubat_top), maintenir le courant de sortie de la pile à combustible (Ifc) constant et recommencer ladite étape f), sinon passer au quatrième test ;et
- 4) mesurer l'indice de charge de la batterie (SOC) et le comparer à une quatrième valeur critique prédéterminée (SOC_cons), si l'indice de charge de la batterie est différent de ladite quatrième valeur critique prédéterminée (SOC_cons), modifier le courant de sortie de la pile à combustible (Ifc) et recommencer ladite étape f) sinon aller au premier test.

2. Procédé de gestion selon la revendication 1, **caractérisé en ce que** l'étape f) comprend un sixième test à réaliser si le cinquième test réussit et qui consiste à mesure le courant (Ifc) en sortie de la pile à combustible et le comparer à un second seuil critique prédéterminée (Ifc-min), si ledit courant en sortie de la pile à combustible est inférieur audit second seuil critique prédéterminée (Ifc-min), augmenter le courant en sortie de la pile à combustible (Ifc) afin qu'il atteigne ledit second seuil critique prédéterminée (Ifc-min) et recommencer ladite étape f), sinon augmenter la pression (P) jusqu'à atteindre la valeur de pression maximale (Pmax).

3. Procédé de gestion selon les revendications 1 ou 2, **caractérisé en ce que**, dans le test 4), si l'indice de charge de la batterie (SOC) est inférieur à ladite quatrième valeur critique prédéterminée (SOC_cons), augmenter le courant de sortie de la pile à combustible (Ifc) et recommencer ladite étape f), sinon diminuer le courant de sortie de la pile à combustible et recommencer ladite étape f).

4. Procédé de gestion selon l'une des revendications précédentes, **caractérisé en ce que** la valeur de pression maximal (Pmax) est de 2.5 bar.

5. Procédé de gestion selon l'une des revendications précédentes, **caractérisé en ce que** l'alimentation en courant continu hybride comprend en outre un circuit de régulation (10) utilisé pour récupérer les informations relatives au fonctionnement du système hybride et utilisé pour envoyer des signaux de commande à la pile à combustible et au convertisseur DC/DC.
